# EUROPÄISCHE PATENTANMELDUNG

(11) **EP 3 165 989 A2**
(43) Veröffentlichungstag der Anmeldung: **10.05.2017**
(21) Anmeldenummer: 16193211.6
(22) Anmeldetag: 11.10.2016
(51) Int. Cl.: G05G 1/02, G05G 1/50, B29C 45/00, B22F 3/00

(54) **FUNKTIONSELEMENT SOWIE VERFAHREN ZU SEINER HERSTELLUNG**

(30) Priorität: 13.10.2015 DE 102015117410
(71) Anmelder: Ditter Plastic GmbH + Co. KG, 77716 Haslach i.K. (DE)
(72) Erfinder: Ditter, Rolf Peter, 77716 Haslach i.K. (DE)
(74) Vertreter: Weickmann & Weickmann PartmbB

(57) **Zusammenfassung**

Um Funktionselemente (1) wie etwa eine Drucktaste aus einem keramischen Material durch Formspritzen des Grünlings und anschließendes Sintern herzustellen, sind zusätzliche Maßnahmen, abweichend von der Verarbeitung vom Kunststoff, notwendig, um damit entweder eine zweite Spritzkomponente oder eine Beschichtung zu verbinden, um die wahlfreien lichtdurchlässigen Motiv-Bereiche (4) auf einfache Art und Weise herzustellen.

## Beschreibung

### I. Anwendungsgebiet

Die Erfindung betrifft aus gesintertem Keramikmaterial hergestellte Funktionselemente, zum Beispiel Tasten.

### II. Technischer Hintergrund

Dabei wird unter Keramikmaterial kein auf Ton basierendes Material verstanden, sondern sog. Industrie-Keramik, meist primär bestehend aus Aluminiumoxid, oder Zirkonoxid oder auch Silicium-Nitrat.

Solche keramischen Bauteile besitzen eine sehr hohe Abriebfestigkeit, gute Gleiteigenschaften, und können auch sehr schlagfest hergestellt werden.

Die guten Gleiteigenschaften bewirken auf der anderen Seite jedoch den Effekt, dass die Anhaftung an einer keramischen Oberfläche sehr gering ist, was beispielsweise nachteilig ist, wenn ein solches Keramikteil anschließend beschichtet, beispielsweise lackiert, werden soll, was deshalb bisher vermieden wurde.

Die meisten Keramikmaterialien besitzen auch ein relativ hohes Gewicht, welches deutlich über dem Gewicht der meisten Kunststoffe liegt, meist im Bereich des Gewichts von Aluminium oder darüber, jedoch noch deutlich unter dem Gewicht von Eisen oder Stahl.

Ein wesentlich größerer Nachteil ist die Tatsache, dass Keramikteile zunächst in Form eines formhaltigen Grünlings aus einem Keramikpulver oder einer Keramikpaste hergestellt werden, und dieser nur getrocknete Grünling anschließend bei Temperaturen bis ca. **2000** °C gesintert, also gebrannt wird und dabei einen Volumenschwund von **20** % bis **30** % oder auch mehr vollzieht, sodass die Erzielung eines gewünschten exakten Endmaßes maßgeblich von vielen Parametern abhängt, beispielsweise der richtigen Zusammensetzung des Ausgangsmaterials, der richtigen Sintertemperatur, dem richtigen Temperaturverlauf beim Sintern usw. Damit ist ein gesintertes Teil wesentlich mehr Fehlerquellen unterworfen für die Erzielung einer guten Maßhaltigkeit als ein Spritzgussteil, aus Kunststoff oder aus z.B. Leichtmetall, wie etwa Aluminium.

Denn dort findet zwar ebenfalls nach dem Abkühlen des gespritzten Werkstückes ein Schwund statt, dieser bewegt sich jedoch in der Größenordnung von ein bis zwei Prozent.

Der einzige Vorteil des starken Schwindens beim Sintern liegt darin, dass dieses Schwinden gleichmäßig in allen Raumrichtungen erfolgt, während das Schwinden beim Spritzgießen abhängig von der Gestaltung des Werkstückes in den einzelnen Raumrichtungen unterschiedlich ausfallen kann.

Bisher werden Keramikteile primär aufgrund ihrer hohen Abriebfestigkeit eingesetzt und im medizinischen Bereich auch aufgrund ihrer guten Verträglichkeit im Körper des Patienten, beispielsweise bei der Verwendung als Implantate. Es gibt jedoch auch Funktionselemente, die andere Erfordernisse erfüllen müssen, z.B. die Bedienelemente, wie etwa Drucktaster, wie sie in den Armaturentafeln von Kraftfahrzeugen liegen so eingesetzt werden oder Funktionsteile im Bereich des Maschinenbaus.

Dort kommt häufig die Besonderheit hinzu, dass solche Bedienelemente, die ja häufig nebeneinander in größerer Anzahl vorhanden sind, mit individuellen, für den Benutzer sichtbaren, Symbolen ausgestattet sein sollen.

Bei Beleuchtung von außen, also von der Seite des Benutzers her, sind diese Symbole dadurch sichtbar, dass das Motiv des Symbols einerseits und die Umgebung auf den Bedienelement andererseits - im Folgenden ist nur noch von einer Drucktaste die Rede, ohne die Erfindung hierauf zu beschränken - zueinander farblich kontrastieren.

Solche Drucktasten werden zur Betätigung z.B. in ein umgebendes tragendes Bauteil, beispielsweise ein Armaturenpaneel, hineingedrückt und durch erneutes Betätigen wieder gelöst, wobei die Seitenwände des Drucktasters an entsprechenden Gegenflächen des aufnehmenden Armaturenpaneels gleitend geführt sind und bei Herstellung aus Kunststoff einem Abrieb unterliegen können.

Die Erkennbarkeit des Motivs wird bei dunkler Umgebung, also bei Nacht, dadurch gewährleistet, dass die Drucktaste hinterleuchtet wird, und das Motiv des Symbols aus einem für diese Hinterleuchtung zumindest teilweise lichtdurchlässigem Material, meist einem opaken, Material, besteht, sodass der Benutzer von der Vorderseite her das Motiv des Symboles leuchten sieht.

Dabei wird in den meisten Fällen opakes aber nicht vollständig durchsichtiges, glasklares Material für das Motiv verwendet, da ja bei ausgeschalteter Hinterleuchtung das Innere des Armaturenpaneels durch das glasklare Symbol hindurch nicht erkennbar sein soll, und vor allem bei heller Umgebung um das Motiv herum kein ausreichender Kontrast zum Motiv gegeben wäre.

Unter opakem Material wird dabei Material verstanden, welches bei auf das Material gerichteter, insbesondere gebündelter, ausreichend starker Beleuchtung lichtdurchlässig ist, bei diffuser und relativ schwacher Beleuchtung wie etwa Tageslicht von der Beleuchtungsseite her dagegen undurchsichtig erscheint.

An dieser Stelle sei bemerkt, dass das Motiv nicht immer die hellere der beiden Kontrastfarben sein muss, da es auch dunkle opake Materialien gibt, die im Tagesbetrieb von einer hellen Umgebungsfarbe umgeben sein können.

Die Herstellung der verschiedenen benötigten Symbole auf den Drucktasten kann auf unterschiedliche Art und Weise erfolgen.

Eine gängige Methode besteht darin, die Drucktaste aus lichtdurchlässigem, opakem Material herzustellen und - auf der Außenseite oder der Innenseite - mit einer undurchlässigen Schicht, meist einer Lackschicht, zu bedecken. Dann ist es möglich, aus dieser lichtundurchlässigen Schicht mittels z.B. eines Lasers oder auch eines mechanischen Bearbeitungswerkzeuges den Bereich des gewünschten Motivs zu entfernen, sodass in diesem Bereich der Taster wieder vollständig lichtdurchlässig ist.

Auf diese Art und Weise kann eine große Anzahl unterschiedlicher Motive auf den Tasten hergestellt werden.

Es besteht nun das Bedürfnis, insbesondere solche teilweise lichtdurchlässigen und teilweise lichtundurchlässigen Funktionselemente wie etwa Bedienelemente in Form von Drucktasten zumindest teilweise aus dem beschriebenen Keramikmaterial herzustellen.

Andererseits ist es bereits bekannt, Funktionselemente, die bisher meist aus Kunststoff im Spritzguss-Verfahren hergestellt wurden, auch aus Keramikmaterial im Spritzguss-Verfahren herzustellen, indem eine Paste, die sowohl einen Binder als auch das eigentliche Keramikmaterial, meist Aluminiumoxid, enthält, durch konventionelles Spritzgießen in einer Spritzgussmaschine zu einem formhaltigen sog. Grünling gespritzt wird, der anschließend bei hoher Temperatur gebrannt und dadurch gesintert wird, wobei durch Verflüchtigung des Binders der erwähnte starke Volumenschwund eintritt.

Dadurch lassen sich die spezifischen Eigenschaften von Keramikmaterial nutzen, sei es je nach Anwendungsfall die gute Gleitfähigkeit an den benötigten Gleitflächen, das hohe Gewicht für ein positives haptisches Empfinden oder die hohe Abriebfestigkeit in dem Bereich, der von einem Benutzer häufig berührt wird.

Dabei ist es bereits problemlos möglich, mittels Spritzgießen des Grünlings Keramikteile herzustellen, die insgesamt aus dem gleichen Keramikmaterial bestehen.

### III. Darstellung der Erfindung

### a) Technische Aufgabe

Es ist daher die Aufgabe gemäß der Erfindung, auch Funktionselemente mit frei wählbaren lichtdurchlässigen Bereichen wenigstens teilweise aus Keramikmaterial mittels Spritzgießen des Grünlings und anschließendem Sintern herzustellen.

### b) Lösung der Aufgabe

Diese Aufgabe wird durch die Merkmale der Ansprüche **1** und **10** gelöst. Vorteilhafte Ausführungsformen ergeben sich aus den Unteransprüchen.

Diese Aufgabe wird für das Funktionselement dadurch gelöst, dass es sowohl aus lichtdurchlässigen als auch aus nicht-lichtdurchlässigen Materialbereichen besteht, wovon wenigstens einer dieser Materialbereiche aus spritzgegossenem und anschließend gesintertem Keramikmaterial besteht, wobei die lichtdurchlässigen Materialbereiche so angeordnet sind, dass sich dadurch ein sich durch die gesamte Dicke des Funktionselementes hindurch erstreckender Lichtdurchlass ergibt.

Die beiden unterschiedlichen, also lichtdurchlässigen und lichtundurchlässigen, Materialbereiche können in Form von aneinander anliegenden Schichten vorliegen, die quer zur Beleuchtungsrichtung bzw. Betrachtungsrichtung des Benutzers verlaufen, oder sie können auch als quer zu dieser Tiefenrichtung nebeneinanderliegende und aneinander angrenzende Abschnitte vorliegen.

Dabei ist die bevorzugte Bauform die des Schichtaufbaus mit quer zur Tiefenrichtung verlaufenden Schichten, welche den Vorteil besitzt, dass die lichtundurchlässige Schicht zur Erzeugung eines Lichtdurchlasses in diesem gewünschten Bereich lediglich entfernt werden muss, beispielsweise durch mechanisches Entfernen, wie etwa Fräsen, oder durch Wegbrennen mittels eines Lasers, um Lichtdurchlässe in sehr vielen unterschiedlichen Formen herzustellen entsprechend der großen Anzahl unterschiedlicher gewünschter Motive oder Symbole auf einem Bedienelement.

Das in Abschnitten nebeneinander Anordnen von lichtdurchlässigen und lichtundurchlässigen Materialbereiche erfordert dagegen meist eine für das jeweilige Motiv des Lichtdurchlasses spezifisch ausgebildete Spritzform oder Formteil.

Bei einem Schichtaufbau wird abhängig von der gewünschten optischen Wirkung und den weiteren Parametern im späteren Einsatz des Funktionselementes die zunächst durchgehende lichtundurchlässige Schicht entweder auf der dem Betrachter und Benutzer zugewandten Vorderseite oder auf der von ihm abgewandten Rückseite aufgebracht, denn abhängig davon ist die dreidimensionale optische Wirkung eine andere.

Bei Aufbringen auf der Vorderseite kann die lichtundurchlässige Schicht beispielsweise matt oder auch glänzend ausgebildet sein, jedoch muss diese lichtundurchlässige Schicht dann sehr widerstandsfähig und abriebfest sein, da sie den häufigen Berührungen durch den Benutzer standhalten muss. Deshalb wird die auf der Vorderseite aufgebrachte lichtundurchlässige Schicht häufig zusätzlich mit einer - nach dem teilweisen Entfernen der lichtundurchlässigen Schicht zur Erzielung des Lichtdurchlasses - vorzugsweise durchgehenden, lichtdurchlässigen, insbesondere glasklaren, Schicht wie etwa einem UV-aushärtenden und damit sehr widerstandfähigen Lack überzogen wird, was jedoch ein weiterer Arbeitsschritt ist.

Bei Anordnung der lichtundurchlässigen Schicht auf der vom Benutzer und Betrachter abgewandten Rückseite sind derartige zusätzliche Schutzmaßnahmen in aller Regel nicht notwendig, da in diesem Fall die lichtundurchlässige Schicht nicht einem Verschleiß durch ständige Berührung durch den Benutzer unterworfen ist.

Dabei wird die mechanische Stabilität des Funktionselementes im Bereich des Lichtdurchlasses, in dem dieses Funktionselement meist plattenförmig ausgebildet ist und insgesamt häufig eine insbesondere kappenförmige Gestalt besitzt, primär oder ausschließlich durch das Material und die Wandstärke der lichtdurchlässigen Schicht bewirkt, während die lichtundurchlässige Schicht demgegenüber eine sehr viel geringere, meist um den Faktor von mindestens **50,** geringere Dicke besitzt, da dies für die Verhinderung des Lichtdurchtritts bereits ausreicht und vor Allem für die Herstellung des Lichtdurchlasses ja so wenig Material wie möglich und damit so wenig Materialdicke wie möglich entfernt werden muss.

Bei der Verwendung von Keramikmaterial wird deshalb das Keramikmaterial für die die Stabilität des Funktionselementes zur Verfügung stellende dickere der beiden Schichten, also für die lichtdurchlässige Schicht, verwendet, indem vorzugsweise opakes Keramikmaterial - also im fertig gesinterten Zustand opakes Keramikmaterial - und für spezielle Anwendungen auch glasklares Keramikmaterial als erster Materialbereich verwendet wird.

Demzufolge ist zu unterscheiden, ob sich der lichtdurchlässige zweite Materialbereich, also die zweite Materialschicht, auf der Vorderseite, also der Berührungsseite, oder Rückseite dieses ersten Materialbereiches befinden soll und aus welchem Material dieser zweite, dann lichtundurchlässige, Materialbereich besteht:
Bei Anordnen des zweiten Materialbereiches auf der Vorderseite besteht eine Möglichkeit im Aufbringen einer lichtundurchlässigen Farbschicht, die mittels Lackieren oder Bedrucken aufgebracht werden kann, oder das Aufkleben einer dünnen, lichtundurchlässigen Folie.

In beiden Fällen kommt bei der Verwendung von Keramikmaterial als darunter liegendem ersten Materialbereich das spezielle Problem auf, dass ein solches Keramikmaterial eine geringe Haftung an seiner Oberfläche besitzt, und deshalb Lacke, Druckfarben oder auch Folien schlechter an einem solchen Keramikmaterial anhaften als beispielsweise an einem Spritzgussteil aus Kunststoff.

Um dies zu kompensieren, sind mehrere Maßnahmen möglich:
- Eine erste Möglichkeit besteht darin, nach teilweisem Entfernen des lichtundurchlässigen zweiten Materialbereiches, in Form der Lackschicht oder Folie, eine zumindest lichtdurchlässige, vorzugsweise glasklare, Verschleiß-resistente Deckschicht über die vorzugsweise gesamte Vorderseite hinweg, vor Allem über den gesamten lichtundurchlässigen zweiten Materialbereich hinweg, aufzubringen, die aus im ausgehärteten Zustand besonders abriebfestem Material besteht, wie etwa ein mittels UV-Licht aushärtender Lack. Dabei muss das Material dieser lichtdurchlässigen Deckschicht hinsichtlich der Haftungseigenschaften an das Material des lichtdurchlässigen ersten Materialbereiches aus Keramik angepasst sein, denn im Bereich des Lichtdurchlasses muss diese Deckschicht direkt an dem Keramikmaterial des ersten Materialbereiches ausreichend anhaften.
- Als zweite Möglichkeit kann - aufgrund der sehr hohen Temperaturbeständigkeit des ersten Materialbereiches aus Keramikmaterial - dieses problemlos auf Temperaturen bis **80**°C oder gar **100**°C und bei Bedarf auch darüber bis etwa **200**°C aufgeheizt werden, sei es während des Lackierens oder Bedruckens oder auch während des Aufbringens einer Folie, oder auch wahlweise nach diesen Vorgängen, um dadurch das Anhaften der Farbschicht oder der Folie deutlich zu verbessern.
- Eine dritte Möglichkeit besteht darin, die Haftung zwischen den beiden Materialschichten zu verbessern, indem die vordere Außenfläche des lichtdurchlässigen Keramikmaterials, also des ersten Materialbereichs, nicht optimal glatt, sondern etwas rau hergestellt wird, insbesondere mit einer Rauigkeit von mindestens **10**µm, besser mindestens **30**µm, besser mindestens **50**µm, so dass eine wesentlich größere Oberfläche zum Anhaften und teilweise auch Verhaken der darauf aufgebrachten Farbschicht, insbesondere mittels Lackieren, gegeben ist.

Ein solches Aufrauen der Oberfläche des Keramikmaterials kann vorzugsweise direkt beim Herstellen in der Spritzgussform erfolgen, ersatzweise auch nach dem Sintern des Keramikmaterials durch Oberflächenbearbeitung wie etwa Lasern.

In letzterem Fall kann das Aufrauen der Oberfläche bereits gezielt nur in den Bereichen außerhalb des als Lichtdurchlass gewünschten Motives erfolgen, also die Oberfläche des Keramikmaterials im Bereich des späteren Motives glatt belassen werden, so dass dort nach Entfernen der lichtundurchlässigen Schicht eine glatte Oberfläche zum Vorschein kommt, was insbesondere dann sinnvoll ist, wenn nach Erstellen des Lichtdurchlasses keine über das Motiv hinweg durchgehende lichtdurchlässige oder gar glasklare Deckschicht mehr aufgebracht wird. In gleicher Weise wie jetzt für das Anbringen auf der Vorderseite des ersten, lichtdurchlässigen Materialbereiches kann dies natürlich auch stattdessen auf der Rückseite des lichtdurchlässigen Materialbereiches erfolgen, wobei jedoch die unterschiedlichen Randbedingungen zu berücksichtigen sind:
Weder die Anhaftung der undurchlässigen Schicht als zweitem Materialbereich an dem ersten Materialbereich noch die Verschleißfestigkeit der lichtundurchlässigen Schicht müssen so hoch sein wie bei Anbringung auf der Vorderseite, der Berührungsseite, da von der Rückseite her keine mechanische Berührung durch den Benutzer erfolgen wird.

Deshalb ist bei Anbringung auf der Rückseite in aller Regel auch keine zusätzliche Anordnung einer lichtdurchlässigen Deckschicht über das Motiv und vorzugsweise die gesamte umgebende undurchlässige Schicht notwendig.

Auf der anderen Seite hat die Anbringung der lichtundurchlässigen Schicht auf der Rückseite den optischen Effekt, dass der erste Materialbereich aus Keramikmaterial, der ja eine Materialstärke im Bereich von einem oder mehreren Millimetern besitzt, optisch durchaus erkennbar ist und auf unterschiedliche Weise genutzt werden kann:
Zum Einen können - wie grundsätzlich bekannt - neben lediglich Entfernung der lichtundurchlässigen Schicht zur Erzeugung des Motives im Bereich des Motives Vertiefungen in die darunter liegende Trägerschicht, hier den ersten Materialbereich aus lichtdurchlässigem Keramikmaterial, hergestellt werden, die sich dann von der hinten liegenden lichtundurchlässigen Schicht aus nach vorne erstrecken und bewirken, dass diese Vertiefungen von der Vorderseite her - also lotrecht auf die Vorderseite des Funktionselementes gesehen - weiterhin als das gewünschte Motiv wahrgenommen werden, aber zusätzlich auch noch unter einem sehr schrägen Winkel zur Lotrechten als Motiv gut erkannt werden, wegen der dreidimensionalen Erstreckung von der Rückseite her in diese lichtdurchlässige Schicht hinein.

Eine weitere Besonderheit ist dadurch gegeben, dass nun beim fertig hergestellten Funktionselement die Vorderseite des Funktionselementes aus dem keramischen Material des ersten Materialbereiches besteht, welches zum Einen sehr widerstandsfähig und abriebfest ist, vor Allem aber auf Hochglanz poliert werden kann, was zum Einen die spätere Verschmutzung im Einsatz minimiert, da mit zunehmender Glättung der Oberfläche das Anhaften von Schmutzpartikeln immer mehr erschwert wird. Zum anderen jedoch bewirkt dies eine optisch sehr hochwertig wirkende Oberfläche, die dennoch keinerlei weitere Schutzmaßnahme wie einer Deckschicht aus UV-gehärtetem Decklack oder Ähnliches benötigt.

Eine weitere Möglichkeit besteht darin, zusätzlich zur Herstellung des Lichtdurchlasses durch Entfernung entsprechender Schichtbereiche der an der Rückseite liegenden lichtundurchlässigen Schicht auf der Vorderseite des mit einer vorzugsweise glatten, ebenen Vorderseite gespritzten ersten Materialbereiches aus Keramikmaterial dort Erhebungen in Form des Motivs anzuordnen, die somit auch ertastet werden können, was für manche Anwendungen aus Sicherheitsgründen oder anderen Gründen vorteilhaft sein kann:
In diesem Fall wird von der Vorderseite her das Material des außen liegenden keramischen Materialbereiches in den Bereichen abseits des Motives bis zu einer gewissen Tiefe entfernt, so dass die ursprüngliche Schichtdicke dieses keramischen Materialbereiches nur im Bereich des Motivs erhalten bleibt, und dadurch fühlbar ist.

Eine generelle weitere Möglichkeit besteht bei einem Schichtaufbau auch darin, dass die aneinander liegende lichtundurchlässige und lichtdurchlässige Schicht beide aus Keramikmaterial bestehen, jedoch im einen Fall aus lichtdurchlässigem, insbesondere opakem, und im anderen Fall aus lichtundurchlässigem Material, wobei das keramische Grundmaterial das gleiche sein kann, und lediglich für die Lichtundurchlässigkeit entsprechende Farbpigmente dem Keramikmaterial hinzugefügt werden.

In diesem Fall muss nicht eine der beiden keramischen Materialschichten alleine die für das Funktionselement notwendige mechanische Festigkeit im fertigen Zustand bieten, sondern es genügt, wenn dies durch beide gemeinsam erreicht wird, vor Allem dann, wenn die beiden Materialschichten aus Keramik fest miteinander verbunden sind:
Auf diese Art und Weise sind sehr geringe Wandstärken erzielbar bei ausreichender Stabilität, indem beispielsweise die Wandstärke einer der beiden oder gar jeweils beider keramischer Materialschichten unter **2**mm, insbesondere unter **1**mm, insbesondere unter **0,7**mm, insbesondere unter **0,5**mm, insbesondere unter **0,3**mm liegt.

Dies kann entweder wie generell bekannt durch Verkleben erfolgen.

Eine andere Möglichkeit besteht darin, die beiden keramischen Materialbereiche, also Materialschichten, einstückig miteinander mittels Spritzgießen herzustellen, was auf unterschiedliche Art und Weise erfolgen kann:
Entweder werden die beiden Materialschichten in der gleichen Spritzform in zwei nacheinander erfolgenden Spritzschritten hergestellt, indem beim Herstellen der ersten Materialschicht ein bewegliches Formteil, ein Schieber, den Raum für die nachfolgend anzuspritzende zweite Materialschicht freihält, oder die beiden Materialschichten werden durch gleichzeitiges Einspritzen der beiden Materialschichten in die Form hergestellt, wobei dann der Übergang zwischen den beiden Materialschichten keinen exakt definierten Verlauf oder gar Ebene ergibt, was jedoch für einige Anwendungsfälle ausreichend sein kann.

Funktionselemente besitzen häufig auch Flächen, die im späteren Betrieb als Gleitflächen dienen und auf einer Gegenfläche, die meist aus einem anderen Material besteht, gleitend entlang bewegt werden müssen.

Dabei besteht häufig die Notwendigkeit, dass eine solche Gleitfläche möglichst wenig verschleißt und damit eine hohe Lebensdauer besitzt, wie dies bei einem Keramikmaterial in der Regel gegeben ist.

Aus diesem Grund wird erfindungsgemäß vorgeschlagen, vor Allem bei einem Schichtaufbau des Funktionselementes die aus Keramikmaterial bestehende Schicht entweder zur Vorderseite oder zur Rückseite hin liegend so zu wählen, dass dies diejenige Seite des Funktionselementes ist, die im späteren Betrieb als Gleitfläche dienen soll.

Als Tasten dienende Funktionselemente sind beispielsweise häufig kappenförmig gestaltet und werden vom Bediener in Tiefenrichtung eingedrückt und wieder gelöst und zurück bewegt mittels einer Feder, wobei die sich an die Frontplatte anschließenden Seitenwände entweder auf der Innenseite oder auf der Außenseite als Gleitfläche dienen. Wird die Außenseite der Wand als Gleitfläche benötigt, besteht das kappenförmige Funktionselement vorzugsweise auf der gesamten Außenseite, also auch im Bereich der Frontplatte, aus Keramikmaterial als erstem Materialbereich, indem das Keramikmaterial lichtdurchlässig ist.

Eine Alternative besteht darin, aus einem im Wesentlichen aus Kunststoff oder Metall, insbesondere Leichtmetall, bestehenden Spritzgussteil ein fertig gesintertes Keramikteil als Einlegeteil im Bereich der Gleitfläche mit einzuspritzen.

Auch hier besteht der Vorteil darin, dass gerade solche erhabenen, tastbaren Motive in Form von entsprechend geformten Erhebungen die einem besonders hohen Beanspruchung im Einsatz unterliegen, durch die hohe Härte und Abriebfestigkeit des Keramikmaterials nur einen geringen Verschleiß unterliegen.

Statt einem Schichtaufbau können der lichtundurchlässige und der lichtdurchlässige Materialbereich auch quer zur Tiefenrichtung, also der Beleuchtungsrichtung oder Betrachtungsrichtung, nebeneinander, also in nebeneinanderliegenden Material-Abschnitten, angeordnet werden:
Im Gegensatz zu dem schichtartigen Aufbau besteht in diesem Fall bevorzugt der lichtundurchlässige Materialbereich, also Material-Abschnitt, aus Keramikmaterial, der Durchbrüche aufweist, in denen als zweiter lichtdurchlässiger Materialbereich oder Material-Abschnitt ein lichtdurchlässiges Material eingebracht ist.

Wenn dieser zweite, lichtdurchlässige Materialabschnitt ebenfalls aus Keramikmaterial besteht, wird der entsprechende Grünling des Keramikmaterials vorzugsweise zweistufig in derselben Form gespritzt, indem zunächst der den größeren Flächenanteil innehabende Materialbereich, meist der erste Materialbereich aus lichtundurchlässigem Material, in die Form eingespritzt wird, und die Freiräume für den zweiten, später lichtdurchlässigen Materialbereich noch von einem Schieber freigehalten werden, und die Hohlräume im zweiten Spritzschritt von dem anderen, nach dem Sintern lichtdurchlässigen, Materialbereich gefüllt werden.

Ein solcher Grünling kann dann gemeinsam, also mit beiden Materialbereichen gemeinsam, anschließend gesintert werden.

Die beiden Materialbereiche sind dann einstückig miteinander hergestellt.

Eine andere Möglichkeit besteht darin, den zweiten Materialbereich aus einem anderen Material als Keramikmaterial herzustellen, beispielsweise herkömmlichem Kunststoff, wobei dann beim Herstellen mittels Spritzgießen der zuvor hergestellte erste Materialbereich als fertig gesintertes Teil beim Spritzen des Kunststoffanteils als Einlegeteil in der Spritzform verwendet wird.

Eine andere Möglichkeit besteht darin, die beiden Materialbereiche separat herzustellen, wobei der zweite Materialbereich ebenfalls ein spritzgegossenes und gesintertes Keramikteil sein kann oder ein nach einem anderen Verfahren oder aus einem anderen Material hergestelltes Teil. Die beiden separat hergestellten Materialbereiche werden anschließend mechanisch zusammengefügt, und zusammengehalten mittels Formschluss, Verkleben oder Verrasten, wobei das für einen Verrastungs-Vorgang notwendige elastische Teil, meist ein Fortsatz, primär von einem Materialbereich zur Verfügung gestellt wird, der nicht aus Keramikmaterial besteht, sondern etwa aus Kunststoff.

Ein Vorteil, falls beide nebeneinander angeordneten Materialabschnitte aus Keramikmaterial bestehen, ist derjenige, dass dann beide Materialabschnitte eine sehr verschleißarme, abriebfeste Oberfläche besitzen. Dies ermöglicht wiederum das nach außen Vorstehen, also die Nutzung von Erhebungen, in Form oder im Bereich des zweiten, lichtdurchlässigen Materialbereiches, die trotz ihrer geringen Fläche und Erhabenheit den auftretenden mechanischen Belastungen aufgrund der keramischen Materialeigenschaften lange Zeit standhalten.

Bevorzugt bilden jedoch die Außenflächen des ersten und des zweiten nebeneinanderliegenden keramischen Materialabschnittes eine miteinander fluchtende Vorderseite, die somit auch gemeinsam poliert, insbesondere auf Hochglanz poliert, werden kann und damit gleichzeitig verschmutzungshemmend und optisch äußerst hochwertig hergestellt werden kann.

Hinsichtlich des Herstellungsverfahrens wird zunächst einmal der aus Keramikmaterial bestehende Materialbereich auf jeden Fall mittels Spritzgießen des Grünlings und anschließendem Sintern hergestellt.

Der zweite Materialbereich kann ebenfalls aus einem - dann zumindest hinsichtlich der Lichtdurchlässigkeit anderen - Keramikmaterial bestehen, aber auch aus einem anderen Material. Dementsprechend ist die Vorgehensweise dann eine andere:
Bei einstückiger Herstellung eines Funktionselementes aus zwei verschiedenen Keramikmaterialien werden die beiden entweder in ein und derselben Form in entweder nacheinander erfolgenden Spritzschritten (zweistufiges Spritzen) durchgeführt oder durch gleichzeitiges Einspritzen der beiden Keramikmaterialien (Co-Injektion).

Beim gemeinsamen Spritzen beider Materialbereiche, insbesondere MaterialSchichten, in derselben Spritzform kann die Wandstärke einer der beiden Materialschichten geringer gewählt werden, als es für eine im Betrieb ausreichende Stabilität im späteren Einsatz notwendig wäre, sofern beide Materialschichten gemeinsam diese Stabilität aufbringen.

Eine andere Möglichkeit besteht darin, den einen Materialbereich aus dem ersten Keramikmaterial als Grünling zu spritzen, aus der Form zu entnehmen, zu sintern und anschließend als Einlegeteil in einer kleineren Form zu verwenden, in der dann als zweitem Materialbereich ein anderes Material an gespritzt wird, wie etwa Kunststoff oder Aluminium, welches nach dem Spritzgießen nur noch einem geringen Schwund unterliegt.

Für das anschließende Aufbringen einer Beschichtung, sei es aus Lack, Farbe, Folie oder in anderer Form, kann die entsprechende Außenseite des mittels Spritzgießen und Sintern hergestellten keramischen Materialbereiches entweder während des Spritzgießens oder nach dem Sintern aufgeraut werden bzw. von Anfang an rau hergestellt werden, um das Anhaften der aufzubringenden Schicht zu erleichtern.

Alternativ oder ergänzend kann beim anschließenden Lackieren oder Folieren oder Bedrucken während oder spätestens unmittelbar nach diesem Vorgang die aus Keramikmaterial als erstem Materialbereich bestehende Trägerschicht auf mindestens **70**°C, besser mindestens **80**°C, besser mindestens **100**°C, besser mindestens **120**°C, besser mindestens **150**°C erwärmt werden, um das Anhaften der Beschichtung zu verbessern.

Falls auf der Vorderseite das Motiv in Form von Erhebungen auch fühlbar sein soll, wird von der zunächst glatten, ebenen Vorderseite des fertig hergestellten keramischen Materialbereiches oder ganzen Funktionsteiles durch Abtrag eines Teils der Oberfläche bis zu einer gewünschten Tiefe, jedoch insbesondere nur außerhalb des Bereichs des Lichtdurchlasses, also des Motivs, die gewünschte Erhebung, meist ebenfalls in Form des gewünschten Motivs, hergestellt.

Falls die zum Benutzer hin weisende Vorderseite des Funktionsteiles aus dem keramischen ersten Materialbereich besteht, wird dessen Vorderseite vor der Verwendung vorzugsweise poliert, insbesondere hochglanzpoliert, um die optische Wirkung zu verbessern und vor Allem das Anhaften von Verschmutzungen dauerhaft zu verringern.

Falls - insbesondere bei quer zur Tiefenrichtung aufeinanderfolgenden unterschiedlichen Material-Abschnitten - einer der Materialbereiche, insbesondere der lichtdurchlässige Materialbereich, aus Kunststoff besteht und dieser Materialabschnitt separat hergestellt wird, werden die beiden fertig hergestellten Materialabschnitt vorzugsweise mittels Verrasten formschlüssig miteinander verbunden, wobei der entsprechende elastische oder federnde Teil der Rastvorrichtung insbesondere an dem nicht aus Keramikmaterial bestehenden anderen Materialabschnitt ausgebildet ist.

### c) Ausführungsbeispiele

Ausführungsformen gemäß der Erfindung sind im Folgenden beispielhaft näher beschrieben. Es zeigen:
- Figur **1**a, b:: ein von der Außenansicht her etwa quaderförmiges Funktionselement in perspektivischer Ansicht und in der Aufsicht auf das darauf befindliche Motiv,
- Figur **2**a, b:: das Funktionselement der Figur **1** in Schnittdarstellung mit mehreren daran eingezeichneten Detaillösungen,
- Figur **3**a, b:: Prinzipdarstellungen für Herstellungsabläufe von Funktionselementen

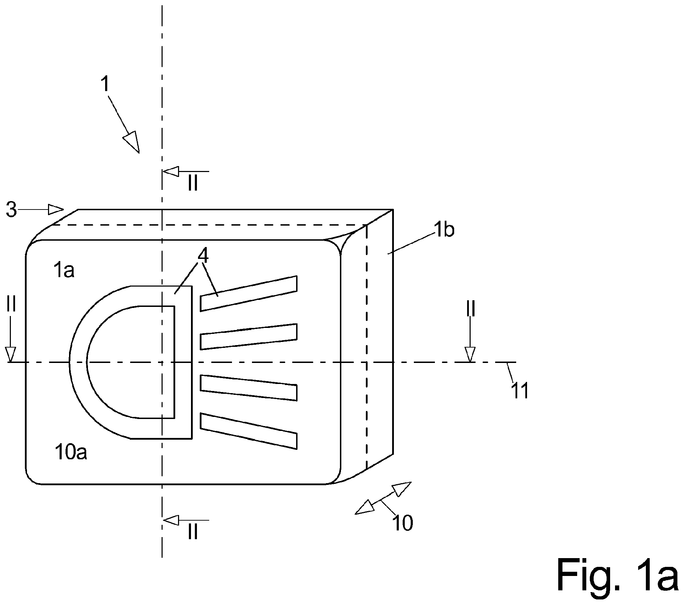

**Figur 1a** zeigt ein von der Außensicht her etwa quaderförmiges Funktionselement **1,** bei dem lediglich die Eckbereiche zur Vorderseite **10**a hin abgerundet sind, in perspektivischer Ansicht.

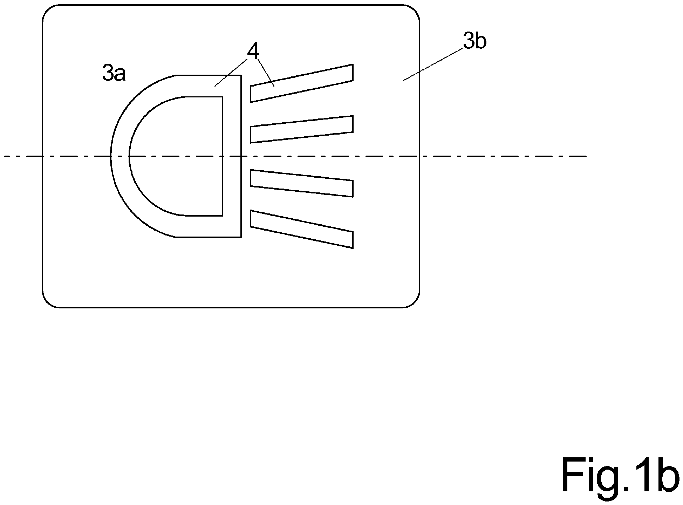

Dabei ist auf der Vorderseite **10**a das darauf angebrachte Motiv **4 -** hier ein Scheinwerfersymbol - erkennbar, wie am besten der **Figur 1b** entnehmbar.

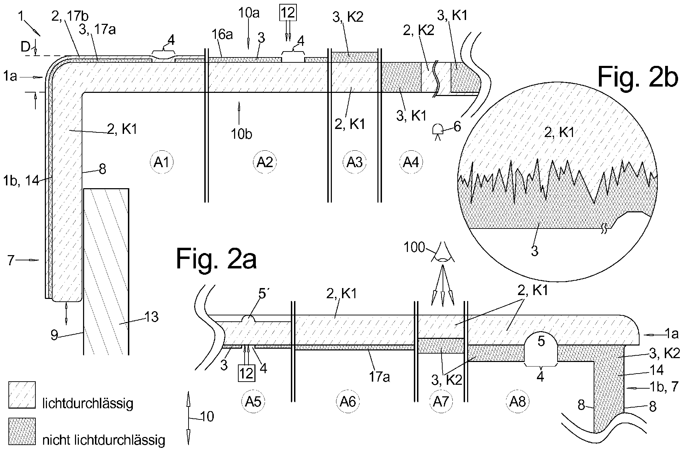

Dieses von der Außenansicht quaderförmige Funktionselement **1** ist - wie die Schnittdarstellung in einer Ebene lotrecht zur Vorderseite **10**a gemäß **Figur 2a** und **b** erkennen lässt, kappenförmig gestaltet mit einer Frontplatte **1**a und sich von deren Rändern von der Vorderseite **10**a nach hinten, also in Tiefenrichtung **10,** erstreckenden - gegebenenfalls über den Umfang umlaufenden - Seitenwänden **7,** die den Führungskörper **1**b für die Frontabdeckung **1**a bilden.

In **Figur 2** sind die Frontplatte **1**a und der Führungskörper **1**b einstückig miteinander hergestellt und dargestellt, jedoch können diese auch separat hergestellt und anschließend miteinander verbunden werden.

Die im vorliegenden Fall umlaufenden Seitenwände **7** sind in **Figur 1a** dadurch angedeutet, dass bei einem Schnitt in aufeinander senkrecht stehenden Querrichtungen **11** immer jeweils die in Figur **2** sichtbaren Seitenwände **7** vorhanden sind.

Allerdings muss ein solcher Führungskörper **1**b keineswegs aus umlaufenden Seitenwänden **7** bestehen, sondern es können unter Umständen auch nur auf zwei einander gegenüberliegenden Seiten vorhandene, vorzugsweise parallel zueinander verlaufende Seitenwände **7** ausreichend sein, oder der Führungskörper **1**b kann eine völlig andere Gestaltung aufweisen.

Er wird sich meist in Tiefenrichtung **10** erstrecken, denn im vorliegenden Fall handelt es sich bei dem Funktionselement **1** beispielsweise um eine Drucktaste, die - wie in **Figur 2a** am linken Bildrand dargestellt - gegenüber einem Tragteil **13** in Tiefenrichtung **10** beweglich angeordnet ist, damit dieses Funktionselement **1** vom Benutzer gedrückt und dadurch ein (nicht dargestellter) Schalter von dem Funktionselement **1** betätigt werden kann.

Bei der vorliegenden Erfindung geht es um die sogenannte Tag-/NachtEignung dieses Funktionselementes **1,** womit gemeint ist, dass das in **Figur 1a****, b** auf der Vorderseite **10**a dargestellte Symbol **4**
- sowohl bei Tag, also bei meist diffuser Beleuchtung von der Vorderseite **10**a her, mittels Kunstlicht oder Tageslicht, sichtbar sein soll,
- als auch bei Nacht, wofür bei Nacht, also Dunkelheit der Umgebung, das Funktionselement, insbesondere dessen Frontplatte **1**a, von der Rückseite her mittels einer Lichtquelle, insbesondere einer Leuchtdiode **6,** hinterleuchtet ist.

Da die Frontplatte **1**a - falls ein Führungskörper **1**b nicht vorhanden ist und das Funktionselement **1** insgesamt nur etwa plattenförmig oder quaderförmig ausgebildet ist, dann das Funktionselement **1** insgesamt - von der Rückseite **10**b zur Vorderseite **10**a hin lichtdurchlässige Abschnitte aufweist, die in der Ansicht von der Vorderseite **10**a her, also von der Betrachter- und Benutzerseite her, die Form des Motives **4** besitzen und bei Nacht leuchten, kann der Benutzer sie auch bei Dunkelheit gut erkennen.

Für die Erkennbarkeit bei Tag, bei der in der Regel eine solche Hinterleuchtung von der Rückseite her nicht gegeben ist, ist für die Erkennbarkeit des Motivs **4** lediglich erforderlich, dass ein ausreichender Farbkontrast zwischen der Farbe des Motivs **4** und der Farbe der Umgebung auf der Vorderseite **10**a vorliegt.

Dabei besteht primär das Ziel, dass das noch nicht mit einem Motiv **4** versehene Funktionselement **1** zunächst kostengünstig in großer Stückzahl hergestellt werden kann, und danach mit geringem Aufwand eine große Anzahl unterschiedlicher Motive **4** am Funktionselement **1** erzeugt werden kann, ohne dass für jedes unterschiedliche Motiv beispielsweise ein aufwendig geformtes Einzelteil oder gar eine Spritzform **15** hergestellt werden muss. Der die mechanische Stabilität größtenteils zur Verfügung stellende, in diesem Fall kappenförmige, Grundkörper des. Funktionselementes **1** soll mittels Spritzgießen in einer Spritzgussmaschine hergestellt werden, erfindungsgemäß aus einem Keramikmaterial.

Um dieses Ziel zu erreichen, wird auch hier - wie bereits bei der Herstellung aus Kunststoff bekannt - der Grundkörper des Funktionselementes **1** oder zumindest dessen Frontplatte **1**a aus einem lichtdurchlässigen Material hergestellt, anschließend mit einer im Vergleich zur Dicke des Grundkörpers dünnen, lichtundurchlässigen Schicht versehen und zur Erzeugung des gewünschten Motivs **4** in dessen Bereich die lichtundurchlässige dünnere Schicht wieder entfernt, sodass in diesem Bereich ein durch die gesamte Dicke D der Frontplatte **1**a sich hindurch erstreckender Lichtdurchlass **4** entsteht. Gleichzeitig - also für den Betrieb bei Umgebungslicht - soll die Farbe der aufgebrachten lichtundurchlässigen Schicht zur im Bereich des Motivs sichtbaren Farbe des darunter liegenden lichtdurchlässigen Grundkörpers einen ausreichend großen farblichen Kontrast besitzen, um auch bei Tag, also bei Umgebungslicht, eine ausreichend gute Erkennbarkeit des Motivs **4** zu gewährleisten.

Da im Tagbetrieb in der Regel keine Hinterleuchtung von der Rückseite **10**b her eingeschaltet, ist, wird als Material für den Grundkörper in der Regel kein glasklares Material, sondern ein opakes Material verwendet, um zu vermeiden, dass bei nicht eingeschalteter Hinterleuchtung durch einen glasklaren Lichtdurchlass **4** hindurch in den Bereich hinter der Rückseite **10**b hineingesehen werden kann.

In den Schnittdarstellungen der **Figuren 2a****, b** werden unterschiedliche Schraffuren hinsichtlich der Lichtdurchlässigkeit in Tiefenrichtung **10,** also in der Regel einerseits der Betrachtungsrichtung durch den Betrachter **100** und auch der Beleuchtungsrichtung von hinten durch zum Beispiel eine Leuchtdiode **6 -** verwendet:
- lichtdurchlässiger, insbesondere opaker Materialbereich **2:** schräge, unterbrochene Schraffur,
- nicht lichtdurchlässiger, also lichtundurchlässiger Materialbereich **3:** Rautenförmige Schraffur.

In der **Figur 2a** sind in mehreren Abschnitten A**1** bis A**8** nebeneinander unterschiedliche Möglichkeiten des Aufbaus, insbesondere der Frontplatte **1**a des Funktionselementes **1** dargestellt, wie nachfolgend erläutert:
Abschnitt A**1** zeigt den in dieser **Figur 2a** linken Endbereich des Funktionselementes **1** und die in diesem Fall einstückige Ausbildung der Frontplatte **1**a mit der sich von dieser am Rand nach hinten in Tiefenrichtung **10** erstreckenden linken Seitenwand **7,** die Bestandteil des Führungskörpers **1** b für die Frontplatte **1**a ist.

Das Funktionselement **1** besteht dabei aus einem lichtdurchlässigen Keramikmaterial K**1**, welches somit einen lichtdurchlässigen Materialbereich **2** darstellt, auf dem auf der Vorderseite **10**a zunächst eine - von der Dicke her sehr viel dünnere - lichtundurchlässige Farbschicht **17**a aufgebracht ist, die somit einen zweiten, lichtundurchlässigen Materialbereich **3** darstellt.

Diese lichtundurchlässige Materialschicht **3** ist zur Erzielung eines Lichtdurchlasses **4** in Form des Motivs bereichsweise entfernt.

Über die somit nur noch abschnittsweise vorhandene lichtundurchlässige Materialschicht **3** ist wiederum eine Farbschicht **17**b aufgebracht, die jedoch lichtdurchlässig, vorzugsweise glasklar, ist und somit eine weitere lichtdurchlässige Materialschicht **2** bildet, sodass im Bereich des Motivs **4,** also dort, wo die lichtundurchlässige Farbschicht **17**a nicht vorhanden ist, ein über die gesamte Decke D der Frontplatte **1a** - falls die Seitenwände sieben fehlen würden, dann des gesamten Funktionselements **1 -** lichtdurchlässig in Tiefenrichtung **10,** also lotrecht zur Erstreckungsebene der Frontplatte **1**a und dessen Vorderseite **10**a, ist.

Bei diesem Schichtaufbau dient die äußerste, also vorderste, lichtdurchlässige Farbschicht **17**b als Schutzschicht, indem hierfür ein sehr hartes Material, beispielsweise ein unter UV-Licht aushärtender glasklarer Lack, verwendet wird, um die weniger abriebfeste lichtundurchlässige Farbschicht **17**a darunter zu schützen.

Diese Schutzschicht **17**b erstreckt sich in aller Regel auch über den Bereich des Lichtdurchlasses **4** hinweg, da sie in aller Regel nach dem Einbringen und bereichsweisen Entfernen der Farbschicht **17**a flächig über die gesamte Vorderseite **10**a aufgebracht wird.

Herstellungsbedingt erstrecken sich die lichtundurchlässige Schicht **17**a als auch die darüber liegende, als Schutzschicht dienende Lackschicht **17**b - die in aller Regel aus Kunststoff bestehen, jedenfalls nicht aus einem Keramikmaterial - nicht nur auf der Vorderseite der Frontplatte **1**a, sondern zumindest teilweise auch entlang der Außenseite des Führungskörpers **1**b in Form der Seitenwände **7.**

Das Funktionselement **1** soll jedoch in Tiefenrichtung **10** beweglich und auf seiner Gleitfläche **8** gleitend entlang einem Tragteil **13** verschiebbar sein, der sich in diesem Fall auf der Innenseite der Seitenwand **7** befindet.

Aus diesem Grund wird hier die Innenseite der aus Keramikmaterial K**1** bestehenden Seitenwand **7** nicht beschichtet, sodass die Oberfläche des Keramikmaterials K**1** die Gleitfläche **8** bildet und somit eine hohe Abriebfestigkeit gegenüber dem Tragkörper **13** gegeben ist.

Der Schichtaufbau des Abschnitts A**2** unterscheidet sich von derjenigen im Abschnitt A**1** im Bereich seiner Frontplatte **1** dadurch, dass auf der Vorderseite **10a** des aus Keramikmaterial K**1** bestehenden Grundkörpers nur eine einzige Schicht in Form einer lichtundurchlässigen Materialschicht **3** aufgebracht ist, beispielsweise in Form einer Folie **16**a, es könnte aber auch ein sehr abriebfester lichtundurchlässiger Lack **17**a sein. Auch hier ist diese lichtundurchlässige Schicht **3** im Bereich des gewünschten Motives **4** entfernt, beispielsweise mittels eines Laser **12** weggebrannt.

In beiden Fällen, also auch beim Schichtaufbau des Abschnitts A**1** sowie teilweise bei den Schichtaufbauten der anderen folgenden Abschnitte, besteht das Problem darin, an dem Keramikmaterial K**1** die nächste anliegende Schicht ausreichend gut und dauerhaft anhaften zu lassen, denn Keramikmaterial hat meistens die Eigenschaft, dass an seiner Oberfläche andere Materialien sehr schlecht haften.

Aus diesem Grund wird - wie in der Ausschnitt-Vergrößerung der **Figur 2b** dargestellt - das Keramikmaterial K **1** an seiner Außenfläche nicht vollständig glatt hergestellt, sondern mit einer erhöhten Rauigkeit, deren Rautiefe jedoch geringer ist als die Dicke der aufzubringenden Farbschicht **17** a oder Lackschicht **16** a, also der lichtundurchlässigen Schicht **3.**

Durch diese Rauigkeit der Keramik-Oberfläche wird eine erhöhte, stark vergrößerte Kontaktfläche zur Verfügung gestellt, die die Haftkraft zwischen den beiden Schichten wesentlich verbessert.

Vorzugsweise erstrecken sich die mikroskopisch kleinen Vertiefungen in dieser rauen Oberfläche in unterschiedliche, schräg zur Tiefenrichtung **10** gerichtete Richtungen, was beispielsweise durch Herstellung dieser mikroskopischen Vertiefung mittels Laserbeschuss erreicht werden kann. Dies bewirkt eine besonders starke Verhakung der danach aufgebrachten Schicht in diesen mikroskopisch kleinen Vertiefungen

Dies gilt insbesondere dann, wenn die auf dem Keramikmaterial K1 aufgebrachte Schicht, hier eine lichtundurchlässige Schicht **3,** so stark erwärmt wird, dass ein teilweises Einbrennen dieser Schicht im Keramikmaterial K**1** erfolgt, was bei Farbschichten **17**a je nach chemischer Zusammensetzung der Farbe meist bei **80** Grad Celsius oder höher erfolgt. Dabei bietet Keramikmaterial K**1** den Vorteil, dass diese Einbrenntemperatur für eine Farbschicht annähernd beliebig hoch gewählt werden kann, bei Bedarf bis zu mehreren **100** Grad Celsius.

Selbst wenn die aufgebrachte Schicht eine Folie **16**a ist, ist die Erwärmung sinnvoll bis zur Teigtemperatur des Materials der Folie **16**a, wodurch dann ebenfalls eine starke Verhakung mit der rauen Oberfläche des Keramikmaterials K**1** erreicht wird.

Im Abschnitt A**3** unterscheidet sich der Schichtaufbau gegenüber dem Abschnitt A**2** dadurch, dass die auf der Vorderseite **10**a aufgebrachte lichtundurchlässige Schicht **3** aus einem lichtundurchlässigen anderen Keramikmaterial K**2** besteht, welche vorzugsweise jedoch eine geringere Schichtdicke d**2** gegenüber der Dicke d**1** der lichtdurchlässigen Keramikschicht K**1** besitzt.

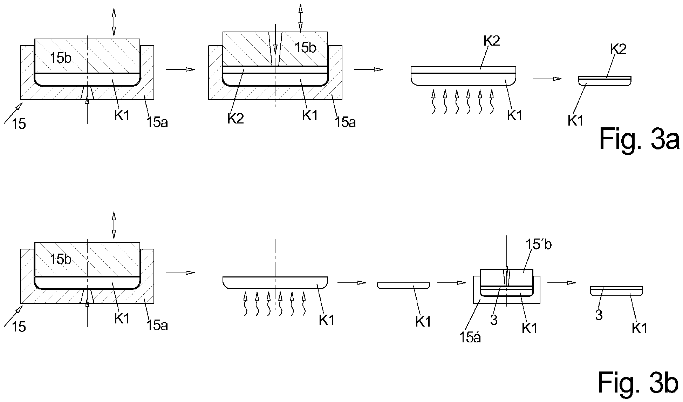

Beide Schichten sind vorzugsweise einstückig miteinander hergestellt und haften dadurch ausreichend gut aneinander, wie beispielsweise anhand der **Figur 3a** erläutert werden wird. Denn die Verbindung zwischen zwei Schichten aus Keramikmaterialien K**1**, K**2** stellt insbesondere dann kein Problem dar, wenn diese beiden Schichten gemeinsam als Grünling hergestellt und gemeinsam miteinander gesintert und dadurch fest miteinander verbunden werden.

Auch hier wird selbstverständlich - in diesem Abschnitt A**3** nicht dargestellt - die lichtundurchlässige Schicht **3** bereichsweise wieder abgetragen, um einen Lichtdurchlass **4** in Form des Motivs zu erzielen.

Der Abschnitt A**8** zeigt den rechten Endbereich der Schnittdarstellung, also mit der rechten Seitenwand **7.**

Der Schichtaufbau dieses Abschnittes A**8** unterscheidet sich zum einen von demjenigen des Abschnittes A**1** dadurch, dass die Seitenwand **7** insgesamt und einstückig zusammen mit der an der Rückseite **10**b der Frontplatte **1**a vorhandenen Schicht aus einem lichtundurchlässigen Material **3** in Form eines vorzugsweise Keramikmaterials K**2** besteht, während die zur Vorderseite **10**a hinweisende Schicht aus einem lichtdurchlässigen Keramikmaterial K**1** in Form einer lichtdurchlässigen Materialschicht **2** besteht.

Wenn beide Schichten der Frontplatte **1**a aus Keramikmaterialien K**1**, K**2** bestehen, die insbesondere einstückig zusammen hergestellt sind, genügt es für eine ausreichende mechanische Festigkeit der Frontplatte **1**a, dass die Dicken d**1** und d**2** der beiden Schichten aus Keramikmaterial K**1**, K**2** nur gemeinsam eine hierfür ausreichende Dicke besitzen. Wie die Aufteilung auf die Dicken d**1**, d**2** der einzelnen Schichten erfolgt, kann beispielsweise vom Herstellungsverfahren abhängig gemacht werden, was insbesondere dann notwendig ist, wenn die beiden Schichten nicht gemeinsam gesintert werden.

So kann die rückseitige lichtundurchlässige Materialschicht **3** in Form des Keramikmaterials K**2** im Bereich der Frontplatte **1** a eine so große Dicke d**2** aufweisen, dass diese für die Festigkeit der Frontplatte **1**a ausreicht, oder auch umgekehrt die Dicke d**1** des Keramikmaterials K**1** eine hierfür ausreichende Dicke besitzen.

Für die Erzielung eines Lichtdurchlasses **4** ist die in diesem Fall auf der Rückseite **10**b liegende lichtundurchlässige Materialschicht **3** bereichsweise entfernt, etwa wiederum mittels eines (nicht dargestellten) Lasers **12.**

Das Besondere gegenüber den anderen Abschnitten besteht hier darin, dass nicht nur eine Entfernung des Materials dieser lichtundurchlässigen Schicht **3** durchgeführt wird, sondern darüber hinaus in diesem Bereich von der Rückseite **10**b her Vertiefungen **5** in die Rückseite der lichtdurchlässigen äußeren Materialschicht **2** eingebracht werden - die hierfür natürlich eine ausreichende Dicke besitzen muss, da die Vorderseite **10**a dieser vorderen lichtdurchlässigen Schicht **2** nicht durchbrochen werden darf - und hierdurch gerade bei Hinterleuchtung im Nachtbetrieb, aber auch bei Umgebungslicht, eine sehr gute, dreidimensionale Wirkung des Motivs **4** erzielt werden kann.

Die Tatsache, dass hier die an der Vorderseite **10**a liegende lichtdurchlässige Schicht **2** aus einem Keramikmaterial K**1** besteht, hat den Vorteil, dass dadurch die Vorderseite **10**a der Frontplatte **1**a äußerst abriebfest ist, und zusätzlich ein Polieren des Keramikmaterials K**1** auf seiner Vorderseite **10**a bis hin zu Hochglanz möglich ist, und aufgrund der hohen Verschleißfestigkeit dieses Keramikmaterials K**1** diese sehr glatte Vorderseite **10**a auch über sehr lange Zeit erhalten bleibt.

Der Schichtaufbau im Abschnitt A**7** unterscheidet sich von demjenigen im Abschnitt A**8** lediglich dadurch, dass die rückseitige lichtundurchlässige Schicht **3** aus dem Keramikmaterial K**2** eine größere Dicke d**2** im Vergleich zur anderen lichtdurchlässigen Schicht **2** aus dem anderen Keramikmaterial K**1** besitzt.

Ferner kann die Seitenwand **7** bei diesem Schichtaufbau - einstückig mit der Frontplatte **1**a hergestellt oder nachträglich daran befestigt - wahlweise mit der lichtdurchlässigen Materialschicht **2** oder der lichtundurchlässigen Materialschicht **3** verbunden sein und aus deren Material bestehen.

Abschnitt A**6** zeigt einen Schichtaufbau, bei dem der Grundkörper wiederum - wie in den Abschnitten A**1** bis A**3** - aus einer lichtdurchlässigen Materialschicht **2** aus Keramikmaterial K**1** besteht.

Der in den Abschnitten A**1** und A**2** beschriebene Aufbau weiterer, vor allem lichtundurchlässiger, Materialschichten **3** erfolgt hier analog auf der Rückseite **10**b des Grundkörpers, der hier aus dem lichtdurchlässigen Keramikmaterial K**1** besteht, was - zusätzlich zu den anhand Abschnitt A**7** und Abschnitt A**8** beschriebenen Vorteilen - den weiteren Vorteil besitzt, dass auf der Rückseite **10**b keine Gefahr der Berührung einer dort aufgebrachten lichtundurchlässigen Schicht **3,** wie etwa einer Farbschicht **17**a, durch ein anderes Bauteil oder gar den Bediener gegeben ist.

Somit genügt für die lichtundurchlässige Schicht **3** auf der Rückseite **10**a ein Material mit relativ geringer Abriebfestigkeit und auch relativ geringer Anhaftung an der rückseitigen Oberfläche des Keramikmaterials K **1.**

Da die - dann nach hinten weisende - Außenfläche einer solchen lichtundurchlässigen Schicht **3,** zum Beispiel Farbschicht **17**a oder Folie **16**a nicht direkt für den Betrachter, der sich ja auf der Vorderseite **10**b befindet, einsehbar ist, muss diese Außenfläche auch nicht optimal glatt sein.

Deshalb kann zum Zwecke der besseren Verbindung mit dem Keramikmaterial K**1** das Keramikmaterial K**1** auf seiner Rückseite **10** hier noch stärker aufgeraut werden mit einer Rauigkeit, die maximal bis zur Dicke der aufgebrachten Schicht, etwa der Farbschicht **17**a, geht. Zusätzlich kann die Dicke der Farbschicht Zinn a und vor allem der Folie **16**a so dünn gewählt werden, dass sie höchstens das Doppelte, insbesondere höchstens das **1,5**-fache der maximalen Rautiefe der ihr zugewandten Oberfläche des Keramikmaterials K**1** beträgt.

Beim Verbinden - insbesondere mittels Wärme - dringt das Material der Folie **16**a oder der Farbschicht **17**a in die Vertiefungen der Oberfläche des Keramikmaterials K**1** großenteils ein, sodass die Außenseite, die nach hinten gewandte Rückseite, dieser lichtdurchlässigen Schicht **3** uneben werden kann, wie im rechten Teil der Detailvergrößerung der **Figur 2b** dargestellt, was aber für die Funktion unerheblich ist und hingenommen werden kann.

Die Gestaltung im Abschnitt A**5** unterscheidet sich von derjenigen des Abschnitts A**6** zusätzlich dadurch, dass eine Materialabnahme zum Beispiel mittels Laser **12** nicht nur in der rückseitigen, lichtundurchlässigen Schicht **3** durchgeführt wird, sondern auch von der Vorderseite **10**a her, also von der Vorderseite des lichtdurchlässigen Keramikmaterials K**1**:
Durch bereichsweises Abnehmen von Material von der Vorderseite **10**a her bleiben in den nicht bearbeiteten Bereichen Erhebungen **5'** stehen, die vorzugsweise die Form und auch die Dimension des Motivs **4** besitzen und mit den dafür durchgeführtem Materialentfernungen in der rückseitigen, lichtundurchlässigen Schicht **3** in Tiefenrichtung **10** fluchten.

Auf diese Art und Weise können die Erhebungen **5'** und damit das Motiv **4** auch von der Vorderseite **10**a her ertastet und nicht nur durch optischen Kontrast gesehen werden, was gerade für sicherheitsrelevante Anwendungen wichtig sein kann oder - außerhalb des Kraftfahrzeugbereiches - für Personen mit schlechter Sehfähigkeit wichtig ist.

Aufgrund der großen Härte und hohen Abriebfestigkeit des Keramikmaterials K**1** werden solche Erhebungen **5'** selbst bei Kollision mit einem Bauteil der Umgebung und häufiger Betätigung durch den Bediener eine hohe Lebensdauer besitzen.

Weiterhin müssen die Bereiche, in denen abseits des Motives Keramikmaterial K**1** zum Beispiel mittels eines Lasers abgetragen wurde, nicht mehr nachbearbeitet werden, da mittels Laser an dem bearbeiteten Keramikmaterial K**1** eine ausreichend glatte Oberfläche erzielt werden kann.

Der Abschnitt A**4** unterscheidet sich von allen anderen Abschnitte dadurch, dass hier lichtdurchlässige Materialabschnitte **2** und lichtundurchlässige Materialabschnitte **3** quer zur Tiefenrichtung **10,** also in Erstreckungsrichtung der Frontplatte, nebeneinander angeordnet sind, wobei die lichtdurchlässigen Abschnitte **2** bei Betrachtung in tiefen Richtung **10** die Form des gewünschten Motivs **4** besitzen.

In diesem Fall bestehen beide Materialabschnitte **2, 3** aus zumindest hinsichtlich ihrer Lichtdurchlässigkeit unterschiedlichen Keramikmaterialien K**1** und K**2**. Diese sind entweder gemeinsam in einem Spritzgussverfahren als Grünling hergestellt und anschließend gesintert, oder als fertig gesinterte separate Einzelteile hergestellt und anschließend miteinander verbunden.

In letzterem Fall kann es sinnvoll sein, dass beide Keramikmaterialien, also auch das Keramikmaterial K**2**, welches lichtdurchlässig ist, auf der Rückseite oder der Vorderseite **10**a mit einer mittels einer in Erstreckungsrichtung der Frontplatte **1**a durchgehenden Schicht über alle Bereiche eines mehrteiligen Motives **4 -** wie in Figur **1** dargestellt - miteinander verbunden sind, wie in der rechten Hälfte des Abschnittes A**4** dargestellt.

Der Nachteil des abschnittweisen Aufbaus kann darin liegen, dass für jedes Motiv eine unterschiedliche Form beim Spritzgießen benötigt wird. Wenn jedoch beispielsweise nur ein Materialabschnitt, vorzugsweise der lichtundurchlässige Materialabschnitt **3,** aus einem Keramikmaterial K**1** besteht, so kann der Grundkörper zunächst mit einer durchgehenden Frontplatte **1**a gesintert und hergestellt werden, und aus dieser fertig gesinterten Frontplatte **1**a mittels Lasern Durchbrüche, die von der Vorderseite **10**a zur Rückseite **10**b der Frontplatte **1**a durchgehen, hergestellt werden.

In einem nächsten Arbeitsschritt können diese Durchbrüche mit einem lichtdurchlässigen Materialabschnitt **2** verfüllt werden, dann jedoch vorzugsweise nicht mit einem Keramikmaterial, sondern beispielsweise mit Kunststoff, zum Beispiel indem der mit Durchbrüchen ausgestattete Grundkörper aus Keramikmaterial K**1** als Einlegeteil in eine Spritzgussform eingelegt wird, in der dann diese Durchbrüche mit Kunststoff ausgespritzt werden, gegebenenfalls ergänzt um eine durchgehende Schicht aus diesem lichtdurchlässigen Kunststoff vorzugsweise auf der Rückseite des lichtundurchlässigen und abriebfesten Grundkörpers aus Keramikmaterial.

Auch hier kann die Anhaftung des Materials in den Durchbrüchen an den Seitenwänden des Keramikmaterials verbessert werden durch eine erhöhte Rauigkeit dieser den Durchbrüchen zugewandten Flächen des Grundkörpers aus Keramikmaterial K**1**. dies ist bei Herstellung der Durchbrüche zum Beispiel mittels Laser-Beschuss besonders gut möglich, indem mittels des Lasers in diesen Umgebungsflächen um die Durchbrüche herum tiefe Kerben oder Krater erzeugt werden können, in denen sich beim anschließenden Ausgießen mit Kunststoff dieser sehr gut verhaken kann.

Die **Figuren 3a** **und b** zeigen Herstellungsverfahren für zumindest den die Stabilität für das Funktionselement **1** bietenden Grundkörper eines solchen Funktionselementes **1.**

**Figur 3a** zeigt die Herstellung eines aus zwei Schichten von Keramikmaterialien K**1** und K**2** bestehenden Funktionselementes **1:**
Dabei wird in eine Spritzform **15** das pastöse, noch nicht gesinterte Keramikmaterial K**1** der ersten Schicht eingespritzt, anschließend der zum wannenförmigen Formunterteil **15**a bewegliche Formstempel **15**b etwas zurückgefahren, um Platz für die zweite Schicht zu schaffen und in den so geschaffenen Hohlraum über den Formstempel **15**b das zweite Keramikmaterial K**2** eingespritzt.

Anschließend wird dieser aus zwei Schichten bestehende Grünling aus der Spritzform **15** entnommen und mittels Temperatureinwirkung gesintert, wobei er stark schrumpft, und liegt dann in dem fertig gesinterten Endzustand vor, in dem er weiteren Bearbeitungsschritten, wie etwa mechanischer oder Laserlicht-Bearbeitung oder weiteren Beschichtungen unterworfen werden kann.

**Figur 3b** zeigt einen Herstellprozess für einen zweischichtigen Grundkörper eines Funktionselementes **1,** bei dem nur eine Schicht aus Keramikmaterial K**1** besteht:
Wie bei der Figur **3**a wird in eine Spritzform **15** das pastöse ungesinterte Keramikmaterial eingespritzt und bildet einen Grünling als ersten Formkörper, der aus der Spritzform **15** entnommen und durch Temperatureinwirkung gesintert wird und dabei wiederum stark schrumpft.

Der gesinterte und geschrumpfte Keramik-Körper kann anschließend als Einlegeteil in eine andere, kleinere Spritzgussform eingelegt werden und dort eine zweite Komponente, die dieses Mal aus einem beim Spritzen kaum schwindenden Material wie etwa Kunststoff besteht, angespritzt werden, vorzugsweise in Form einer zweiten Schicht.

In dem in den Figuren **3**a und b dargestellten Fall ist ein lediglich plattenförmiger Grundkörper erzeugt worden, jedoch kann dieser ebenso gut Seitenwände **7,** wie in den Figuren **1**a, b und **2**a dargestellt, aufweisen.

### BEZUGSZEICHENLISTE

- **1**: Funktionselement
- **1**a: Frontplatte
- **1**b: Führungskörper
- **2**: lichtdurchlässiger Material-Bereich / Material-Schicht / Material-Abschnitt
- **3**: nicht lichtdurchlässiger Material-Bereich / Material-Schicht / Material-Abschnitt
- **4**: Lichtdurchlass, Motiv
- **5,**: Vertiefung
- **5'**: Erhebung
- **6**: Leuchtdiode
- **7**: Seitenwand
- **8**: Gleitfläche
- **9**: Gegenfläche
- **10**: Tiefenrichtung
- **10a**: Vorderseite
- **10b**: Rückseite
- **11**: Querrichtung
- **12**: Laser
- **13**: Tragteil
- **14 15**: Spritzform
- **15**a, b: Formteil
- **16**a, b: Folie
- **17**a, b: Farbschicht

- **100**: Betrachter
- d**1**: Dicke
- d**2**: Dicke
- D: Dicke
- K, K**1**,K**2**: Keramik-Material, erster Materialbereich, keramischer Materialbereich

## Patentansprüche

1. **Funktionselement** (**1**) mit sowohl lichtdurchlässigen **(2)** als auch lichtundurchlässigen **(3)** Material-Bereichen, insbesondere Wand-Schichten oder Wand-Abschnitten des Funktionselementes **(1),** wobei der lichtdurchlässige Bereich **(2)** vorzugsweise aus opakem Material besteht, und wobei die Material-Bereiche so angeordnet sind, dass ein sich durch die gesamte Dicke (D) des Funktionselementes **(1)** hindurch erstreckender lichtdurchlässiger Lichtdurchlass **(4)** gebildet wird,
**dadurch gekennzeichnet, dass**
wenigstens ein erster Materialbereich aus spritzgegossenem und anschließend gesintertem Keramikmaterial (K) besteht.
(Schichtaufbau, das Motiv freigelegt)

2. Funktionselement nach Anspruch **1,**
**dadurch gekennzeichnet, dass**
- der erste Materialbereich aus einem lichtdurchlässigen, vorzugsweise opaken, Material **(2)** besteht,
- auf einer der Außenflächen (**10**a, b) des ersten lichtdurchlässigen, Materialbereiches **(2),** insbesondere der einem Betrachter **(100)** zugewandten Vorderseite (**10**a) oder der vom Betrachter **(100)** abgewandten Rückseite (**10**b) des Materialbereiches **(2),** eine lichtundurchlässiger Material-Bereich **(3),** insbesondere in Form einer Material-Schicht **(3),** mit Durchbrüchen aufgebracht ist.

3. Funktionselement nach Anspruch **2,**
**dadurch gekennzeichnet, dass**
die lichtundurchlässige Material-Schicht **(3)** eine lichtundurchlässige FarbSchicht (**17**a) oder Folie (**16**a), umfasst und insbesondere eine auf deren Außenseite, insbesondere der Vorderseite (**10**a), aufgebrachte lichtdurchlässige, insbesondere glasklare, abriebfeste Lackschicht (**17**b), insbesondere eine mittels UV-Licht ausgehärteten Lack-Schicht (**17**b) oder eine lichtdurchlässige Folie **(16)** umfasst.

4. Funktionselement nach einem der vorhergehenden Ansprüche,
**dadurch gekennzeichnet, dass**
der erste Materialbereich, insbesondere die Schicht, aus Keramik-Material (K) auf der Kontaktfläche zu der Farbschicht (**17**a) oder Folie (**17**b) hin, insbesondere der Vorderseite (**10**a), rau ausgebildet ist, insbesondere mit einer Rauheit, die mehr als **20** %, insbesondere mehr als **40** %, insbesondere mehr als **60** % der Dicke (d**1**) dieser an dem Keramik-Material (K) anzuordnenden Schicht beträgt, aber maximal **120** %, besser maximal **100** % deren Dicke (d**1**).

5. Funktionselement nach einem der vorhergehenden Ansprüche,
**dadurch gekennzeichnet, dass**
- zur Herstellung des wenigstens einen Lichtdurchlasses **(4)** mittels Laser **(12)** oder mechanischer Bearbeitung neben den in der lichtundurchlässigen Materialschicht **(3)** hergestellten Durchbrüchen auch wenigstens eine Vertiefung **(5)** in dem angrenzenden, darunter oder darüber liegenden, lichtdurchlässigen ersten Materialbereich aus keramischen Material **(K1)** vorhanden ist, und/oder
- bei einer zum Benutzer **(100)** hin gewandten äußeren Keramik-Schicht (K**1**) die Vorderseite (**10**a) dieser keramischen Material-Schicht (K**1**) auf Hochglanz poliert ist.
(Mehrere Keramik-Schichten)

6. Funktionselement nach einem der vorhergehenden Ansprüche,
**dadurch gekennzeichnet, dass**
wenigstens ein zweiter Materialbereich **(K2),** insbesondere alle Materialbereiche, ebenfalls aus spritzgegossenem und anschließend gesintertem Keramikmaterial bestehen, und insbesondere wenigstens zwei der aus Keramikmaterial bestehenden Materialbereiche **(K1, K2,)** einstückig zusammen hergestellt sind.

7. Funktionselement nach einem der vorhergehenden Ansprüche,
**dadurch gekennzeichnet, dass**
der erste Materialbereich **(K1)** aus einem lichtdurchlässigen, vorzugsweise opaken, Material **(2)** besteht,
- auf einer der Außenflächen des ersten Materialbereiches (K**1**), insbesondere der einem Betrachter **(100)** zugewandten Vorderseite (**10**a) oder der vom Betrachter **(100)** abgewandten Rückseite (**10**b) des Materialbereiches (K), eine Schicht aus einem ebenfalls gesinterten Keramikmaterial, jedoch einem anderen Material (K**2**) als dem Material des ersten Materialbereiches (K**1**), aufgebracht ist, wobei
- insbesondere die erste oder der zweite keramische Material-Schicht (K**1** oder K**2**) oder beide keramischen Material-Schichten (K**1**, K**2**) eine so geringe Dicke (d**1**, d**2**) aufweisen, dass diese Material-Schicht (K**1** oder K**2**) alleine keine ausreichende Stabilität für die beabsichtigte Nutzung des Funktionselementes **(1)** bietet, insbesondere die Dicke **(d1, d2)** der ersten und/oder der zweiten keramischen Material-Schicht **(K1** oder **K2)** weniger als **2** mm, insbesondere weniger als **1** mm, insbesondere weniger als **0,7** mm, insbesondere weniger als **0,5** mm, insbesondere weniger als **0,3** mm, beträgt.
(Abschnitt-Aufbau)

8. Funktionselement nach einem der vorhergehenden Ansprüche,
**dadurch gekennzeichnet, dass**
innerhalb des ersten keramischen Materialbereiches **(K1),** insbesondere der ersten keramischen Material-Schicht, aus lichtundurchlässigem Material **(3)** ein über die gesamte Dicke **(d1)** dieses Materialbereiches **(K1)** durchgehender zweiter keramischer Materialbereich **(K2)** in Form eines Materialabschnittes oder Wand-Abschnittes aus einstückig mit dem ersten Materialbereich **(K1**) hergestellten lichtdurchlässigen, insbesondere opaken, keramischen Material-Bereich **(2)** besteht und
- entweder die Vorderseite (**10**a) des ersten und des zweiten keramischen Material-Abschnittes **(2, 3)** zueinander fluchten und insbesondere gemeinsam poliert, insbesondere auf Hochglanz poliert, sind,
- oder die Vorderseite (**10**a) des zweiten lichtdurchlässigen Materialabschnittes **(2)** über die Außenfläche des ersten lichtundurchlässigen Materialabschnittes **(3)** vorsteht und dadurch tastbar ist.
(Gleitflächen)

9. Funktionselement nach einem der vorhergehenden Ansprüche, **dadurch gekennzeichnet, dass**
- das Funktionselement **(1)** an einer seiner Außenseiten Gleitflächen **(8)** aufweist, die einen möglichst geringen Reibungswert besitzen, und der keramische Materialbereich (K) so positioniert wird, dass eine seiner Außenflächen die Gleitfläche **(8)** ist, wobei
- insbesondere bei einem kappenförmigen Funktionselement **(1)** und einer Gleitfläche **(8)** an einer der Seitenwände **(7)** die Seitenwand **(7)** wenigstens im Bereich der Gleitfläche **(8)** aus Keramik-Material K) besteht, und
- entweder bei einem auf der Innenseite der Seitenwand **(7)** vorgesehenen Gleitfläche **(8)** der erste keramische Materialbereich (K**1**) die innere Schicht des Funktionselementes **(1)** darstellt
- oder bei einer Gleitfläche **(8)** an der Außenseite einer Seitenwand **(7)** der erste keramische Materialbereich (K) die äußerste Schicht einer in Schichten aufgebauten Seitenwand **(7),** insbesondere des gesamten Funktionselementes **(2),** darstellt.

10. **Verfahren** zum Herstellen eines Funktionselementes **(1)** mit sowohl lichtdurchlässigen **(2)** als auch lichtundurchlässigen **(3)** Material-Bereichen, wobei der lichtundurchlässige Bereich **(3)** vorzugsweise aus opakem Material besteht, und einem dadurch gebildeten, sich durch die gesamte Dicke (D) des Funktionselementes **(1)** hindurch erstreckende Lichtdurchlass **(4),** wobei wenigstens ein erster Materialbereich aus Keramikmaterial (K**1**) besteht, indem
- der keramische Materialbereich (K**1**) hergestellt wird durch
- Spritzgießen einer Keramikpaste, bestehend aus einem Binder und einem Keramikpulver, in einer Spritzform **(15)** zu einem formhaltigen Grünling,
- Sintern des Grünlings,
**dadurch gekennzeichnet, dass**
wenigstens ein weiterer Materialbereich (K**2**)
a) entweder aus einem anderen Keramikmaterial (K**2**), jedoch mit den analogen Verfahrensschritten wie der erste Materialbereich (K**1**), insbesondere in der gleichen Spritzform **(15),** hergestellt wird,
b) oder der wenigstens eine weitere Materialbereich als Beschichtung, insbesondere Lackierung, auf dem gesinterten ersten keramischen Materialbereich (K**1**) aufgebracht wird.

11. Verfahren nach Anspruch **10,**
**dadurch gekennzeichnet, dass**
- im Fall a) die beiden Keramikmaterialien (K**1, 2**) entweder in ein und derselben Spritzform **(15)** in entweder nacheinander erfolgenden Spritzschritten (zweistufiges Spritzen) durchgeführt oder durch gleichzeitiges Einspritzen der beiden Keramikmaterialien (Co-Injektion), oder
- im Fall a) der eine Materialbereich aus dem ersten Keramikmaterial (K **1)** als Grünling im Spritzgussverfahren hergestellt wird, aus der Spritzform **(15)** entnommen wird, gesintert wird und anschließend als Einlegeteil in einer kleineren Spritzform verwendet wird, in der dann als zweitem Materialbereich ein anderes Material angespritzt wird, wie etwa Kunststoff oder Aluminium, welches nach dem Spritzgießen nur noch einem geringen Schwund unterliegt.

12. Verfahren nach Anspruch **11,**
**dadurch gekennzeichnet, dass**
beim gemeinsamen Spritzen beider Keramikmaterialien (K**1, 2**) in Material-Schichten in derselben Spritzform **(15)** die Wandstärke einer der beiden Materialschichten geringer gewählt wird, als es für eine ausreichende Stabilität im späteren Einsatz notwendig wäre, sofern beide Materialschichten gemeinsam diese Stabilität aufbringen.

13. Verfahren nach einem der vorhergehenden Verfahrensansprüche,
**dadurch gekennzeichnet, dass**
- für das anschließende Aufbringen einer Beschichtung, sei es aus Lack, Farbe, Folie oder in anderer Form, die entsprechende Außenseite des mittels Spritzgießen und Sintern hergestellten keramischen Materialbereiches (K**1**, K**2**) entweder während des Spritzgießens oder nach dem Sintern aufgeraut wird oder von Anfang an rau hergestellt wird, um das Anhaften der aufzubringenden Schicht zu verbessern, und/oder
- beim anschließenden Lackieren oder Folieren oder Bedrucken während oder spätestens unmittelbar nach diesem Vorgang die aus Keramikmaterial (K**1** oder K**2**) als erstem Materialbereich bestehende Trägerschicht auf mindestens **70**°C, besser mindestens **80**°C, besser mindestens **100**°C, besser mindestens **120**°C, besser mindestens **150**°C erwärmt werden, um das Anhaften der Beschichtung zu verbessern.

14. Verfahren nach einem der vorhergehenden Verfahrensansprüche,
**dadurch gekennzeichnet, dass**
- von der zunächst glatten, ebenen Vorderseite (**10**a) des fertig hergestellten keramischen Materialbereiches oder ganzen Funktionsteiles **(1)** durch Abtrag eines Teils der Oberfläche bis zu einer gewünschten Tiefe, jedoch insbesondere nur außerhalb des Bereichs des Lichtdurchlasses **(4),** also des Motivs, eine Erhebung **(5'),** meist ebenfalls in Form des gewünschten Motivs **(4),** hergestellt wird, und/oder
- falls die zum Benutzer **(100)** hin weisende Vorderseite (**10**a) des Funktionsteiles **(1)** aus dem keramischen ersten Materialbereich (K**1**) besteht, dessen Vorderseite (**10**a) vor der Verwendung poliert, insbesondere hochglanzpoliert wird.

15. Verfahren nach einem der vorhergehenden Verfahrensansprüche,
**dadurch gekennzeichnet, dass**
bei quer zur Tiefenrichtung **(10)** aufeinanderfolgenden unterschiedlichen Material-Abschnitten (z.B. **2** und **3**) - einer der Material-Abschnitte, insbesondere der lichtdurchlässige Material-Abschnitt **(2),** nicht aus Keramikmaterial, sondern insbesondere aus Kunststoff separat hergestellt wird, und die beiden fertig hergestellten Materialabschnitte (z.B. **2** und **3)** vorzugsweise mittels einer Rastvorrichtung formschlüssig miteinander verbunden werden, wobei der entsprechende elastische oder federnde Teil der Rastvorrichtung an dem nicht aus Keramikmaterial bestehenden anderen Materialabschnitt ausgebildet wird.
